# EUROPÄISCHE PATENTSCHRIFT

(11) **EP 3 564 464 B1**
(45) Veröffentlichungstag und Bekanntmachung des Hinweises auf die Patenterteilung: **09.12.2020**
(21) Anmeldenummer: 18170723.3
(22) Anmeldetag: 04.05.2018
(51) Int. Cl.: E04F 21/18, F16B 19/02, F16B 33/00, F16B 37/00, F16B 1/00

(54) **ZENTRIERHÜLSE UND VERFAHREN ZUR BEFESTIGUNG**
CENTRING SLEEVE AND METHOD FOR FIXING
DOUILLE DE CENTRAGE ET PROCÉDÉ DE FIXATION

(43) Veröffentlichungstag der Anmeldung: 06.11.2019
(73) Patentinhaber: SFS Intec Holding AG, 9435 Heerbrugg (CH)
(72) Erfinder: MAIR, Roland, 6840 Götzis (AT); PALM, Erich, 9434 Au (CH)

(56) Entgegenhaltungen:
- CN-U- 87 204 250

## Beschreibung

Die vorliegende Erfindung befasst sich mit einer Zentrierhülse zur genauen Positionierung von Schrauben beim Befestigen speziell von Fassadenplatten an einer Unterkonstruktion einer Gebäudehülle.

### HINTERGRUND

Im Bauwesen werden heute vor allem beim Büro- und Gewerbebau funktionelle Gebäudehüllen geschaffen, die hohe Anforderungen in punkto Sicherheit, Transparenz, Isolation, aber auch Design und Wartbarkeit erfüllen müssen. Speziell bei anspruchsvoller Architektur muss die Befestigung von Fassadenelementen so erfolgen, dass das gewünschte Gesamtbild nicht negativ durch die Befestigungstechnik beeinflusst wird.

Als Fassadenelemente werden häufig farblich behandelte plattenförmige Bauteile mit und ohne Oberflächenstrukturen verwendet. Die Materialien umfassen Faserzement, Holz, HPL (high pressure laminate - Papierlagen mit Kunststoff), Kunststoffe, Leichtmetall und Verbindungen bzw. Laminate dieser Materialien. Die Dicke solcher Platten beträgt üblicherweise zwischen 4 und 12 mm, je nach Material und Grösse des Elementes und Art der Befestigung. Die Fassadenelemente werden üblicherweise als letztes Element der Gebäudehülle auf einer Unterkonstruktion, häufig einem Gitter oder Raster aus Leichtmetallprofilen, befestigt.

Eine weit verbreitete Befestigungsart für solche Fassadenelemente ist die sichtbare Verschraubung, bei der die Schraubenköpfe als Fassadenbestandteil sichtbar bleiben. Unabhängig von der Befestigungsart muss jedoch berücksichtigt werden, dass die Fassadenelemente und die Unterkonstruktion unterschiedlichen thermischen Belastungen unterliegen und somit sich unterschiedlich ausdehnen. Verspannungen der Fassadenelemente untereinander bzw. zwischen Fassadenelement und Unterkonstruktion können aber Materialermüdung hervorrufen.

Dieses Problem wird häufig so gelöst, dass die Fassadenelemente Durchgangsbohrungen aufweisen, deren Durchmesser grösser gewählt wird als der nominelle Aussendurchmesser des Gewindes der Befestigungsschrauben. Diese Bohrlöcher in den Fassadenelementen können bei deren Herstellung eingebracht werden und müssen daher nicht auf der Baustelle gebohrt werden. Nach der Montage hat jedes Fassadenelement Spiel in seiner Befestigungsebene. Allerdings muss der Kopfdurchmesser der Schrauben konsequenterweise nochmals grösser gewählt werden als der Durchmesser der Bohrungen im Fassadenelement.

Daraus entstehen jedoch bei der Montage der Fassadenelemente eine Reihe von Problemen: Die überdimensionierte Bohrung im Fassadenelement kann der Schraube beim Eindrehen keine Führung bieten. Dies ist umso kritischer, weil die Unterkonstruktion, auf der die Fassadenelemente befestigt wird, in der Regel aus Kostengründen nicht vorgebohrt wird; es werden stattdessen selbstbohrende oder selbstschneidende Schrauben verwendet. Diese benötigen jedoch eine gewisse Zeit, bis deren Bohrspitze bzw. Gewinde greift. Ein Verkippen oder Versetzen der Schraube in genau dieser Phase ist leicht möglich und kann das angestrebte Ziel der "Befestigung mit allseitigem Spiel" gefährden. Eine verkippt oder versetzt angebrachte Schraube kann das Fassadenbild empfindlich stören und das angestrebte Ziel, thermische Spannungen aufzufangen, verhindern.

### STAND DER TECHNIK

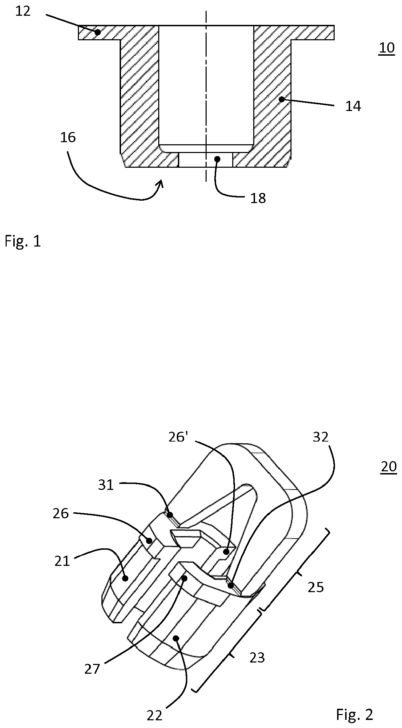

Im Stand der Technik wird dieses Montageproblem beispielsweise so gelöst, dass in die Durchgangsbohrung des Fassadenelementes eine Hülse 10 aus elastischem Material mit einem im Wesentlichen rohrförmigen Körper 14, einem Kragen bzw. Flansch 12 und einem Boden 16 eingesetzt wird (vgl. Fig. 1). Der Aussendurchmesser der Hülse (ohne Kragen) entspricht dabei im Wesentlichen dem Bohrungsdurchmesser im Fassadenelement und die Länge der Hülse der Dicke des Fassadenelementes. Der Kragen 12 dient als Anschlag beim Einführen der Hülse in das vorgebohrte Fassadenelement und wirkt auch als Anschlagpuffer für die eingesetzte Befestigungsschraube. Der Boden der Hülse kann ein Mittenloch 18 aufweisen, welches für eine angesetzte Schraube eine Zentrierung erlaubt. Je nachdem, wie gross der freie Innendurchmesser der Hülse ist, kann dadurch eine Führungswirkung für die Schraube erreicht werden. Der Kragen der Hülse hat im endmontierten Zustand zudem eine dichtende wie auch dämpfende Wirkung, weil der Schraubenkopf auf dem Kragen wie auf einer Unterlagscheibe aufliegt.

Als nachteilig hat sich bei Hülsen gemäss Figur 1 erwiesen, dass der Boden durch den Einschraubvorgang nicht nur aufgeweitet, sondern auch deformiert werden kann. Auch ein Mitnahmeeffekt der Hülse 10 an der eindrehenden Schraube kann vorkommen, was, speziell bei Hülsen aus Thermoplasten durch Reibung zu einem Aufweichen bzw. Aufschmelzen führt. Im schlimmsten Fall wickelt sich die Hülse um den Schraubenschaft und wird zerstört. Auch kann es bei sehr starkem Eindrehen passieren, dass der Kragen beim Anschlag des Schraubenkopfs am Fassadenelement gequetscht oder deformiert wird und seitlich unter dem Schraubenkopf hervortritt. Die Korrektur so eines Montagefehlers wird, insbesondere wenn rückdrehsichere Schrauben verwendet wurden, sehr aufwändig.

Alternativ sind Hülsen vorgeschlagen worden, die nur temporär für den Einschraubvorgang Verwendung finden, aber nicht in der Vorbohrung verbleiben. Die bestehen aus durch lösbare Stege miteinander verbundenen Zylinderwand-Elementen, die zusammen eine Hülse bilden. Diese Hülse wird üblicherweise auf das Bohrloch aufgesetzt und wird durch dünne Zapfen oder Fortsätze mit dem Bohrloch zentriert. Die Hülse stellt also eine zur Unterlage senkrechte, temporäre Bohrlochverlängerung dar. Zumeist durch den Schraubenkopf werden beim Einsenken der Schraube die Verbindungsstege der Elemente aufgetrennt und die Hülse fällt zu Boden. Hülsen diesen Typs werden beispielsweise in der FR 2 941 274 oder der WO 03/026823 beschrieben.

Nachteilig ist, dass solche Hülsen bei senkrechten Fassaden unter Umständen nicht gut halten und vor dem Setzen der Schraube herabfallen können. Als Vorteil zählt, dass kein Hülsenbestandteil im Bohrloch verbleibt und dass über die Fassadenlebensdauer keine Verhärtung oder ein Auflösen einer Hülse auftreten kann.

Die vorliegende Erfindung hat daher die Aufgabe, diese Nachteile des Standes der Technik zu vermeiden, insbesondere eine sichere und einfache Montage von Fassadenelemente der beschriebenen Gattung zu ermöglichen und eine zentrierte und geführte Montage der Befestigungsschraube zu gestatten.

### BESCHREIBUNG DER ERFINDUNG

Dies wird durch eine Zentrierhilfe bzw. Zentrierhülse oder Hülse gemäss den Merkmalen des unabhängigen Vorrichtungsanspruchs bzw. durch einen Montagevorgang gemäss den Schritten des Verfahrensanspruches erzielt. Die abhängigen Merkmale beschreiben nützliche Varianten und Weiterbildungen der Erfindung.

Die erfindungsgemässe Hülse ist ein nur zur Montage gedachtes, nur einmal zu verwendendes Produkt, das einen Befestiger zu Beginn des Montagevorgangs stabilisiert (zentriert und führt) und beim weiteren Eintreiben des Befestigers aufgebrochen bzw. ausgeworfen wird und dem finalen Einschraubvorgang nicht mehr im Wege steht. Damit ist auch die resultierende Befestigung frei von Hülsenbestandteilen.

Eine solche Hülse 20 dient somit zur Zentrierung von Befestigern (Schrauben) bei der Montage von Bauteilen wie Fassadenelementen an der Unterkonstruktion einer Gebäudehülle. Dazu umfasst die Hülse 20 im Wesentlichen zwei Baugruppen: Den Hülsenkörper 23 und einen Verbindungsbügel 25. Der Hülsenkörper setzt sich zusammen aus mehreren Hülsenelementen 21, 22 die um eine zentrale Mittenachse A gruppiert sind und durch in Hülsenlängsrichtung verlaufende Lücken voneinander beabstandet sind. Diese Lücken sind bevorzugt parallel zur Achse A ausgeführt, könnten aber auch z.B. spiralig ausgeführt sein.

Eine Hülse nach technischer Definition ist üblicherweise ein Hohlzylinder mit einer zentralen, in Längsrichtung verlaufenden Durchgangsöffnung. Die zentrale Mitten- oder Längsachse sei mit A bezeichnet. Im vorliegenden Fall ist die Wand des Hohlzylinders aus Segmenten oder Elementen aufgebaut, die als Hülsenstücke 21, 22 bezeichnet sind. Die Lücken sind also Durchbrüche, bevorzugt vollständige Durchbrüche zwischen den Wandelementen. Bevorzugt sind 2 Hohlzylinderwandelemente / Hülsenstücke vorgesehen. Diese beiden Hülsenstücke 21, 22 sind an einem axialen Längsende des Hülsenkörpers 23 durch den abtrennbaren Verbindungsbügel 25 miteinander verbunden.

In einer bevorzugten Variante ist sind die beiden Hülsenstücke (vor dem Einsatz) ausschliesslich über den Verbindungsbügel 25 miteinander verbunden. Mit anderen Worten, es gibt keine materielle Verbindung zwischen den Hülsenstücken ausser dem Bügel. Es ist denkbar, Verbindungsstege direkt zwischen den Hülsenstücken 21, 22 anzubringen, in der Praxis ist das jedoch nicht zwingend.

Erfindungsgemäß weist die Hülse 20 am ersten 21 und zweiten 22 Hülsenelement je eine flanschartige Auskragung 26, 27 radial nach aussen auf. Diese Auskragung muss mindestens so gross dimensioniert werden, dass die Funktion eines Anschlagflansches sicher erfüllt werden kann. Insbesondere ist die Auskragung als Begrenzung gedacht beim Einführen der Hülse 20 in die vorgebohrte Öffnung des Fassadenelementes. Dadurch wird verhindert, dass die Hülse zu tief in die Vorbohrung eingeführt wird.

Es ist vorteilhaft, die flanschartige Auskragungen 26, 27 an einem axialen Ende des Hülsenkörpers 23 anzuordnen, sprich an dem Ende des Hülsenkörpers 23, der dem Einführ-Ende gegenüber liegt.

Erfindungsgemäß verfügt die Hülse 20 bzw. das erste 21 und das zweite 22 Hülsenelement über je mindestens ein Mitnehmerelement 28, 29. Dieses wird als nach radial innen gerichteter Vorsprung realisiert. Technisch kann das Mitnehmerelement 28, 29 als Nocke, Steg, als flanschartiger Ringabschnitt bzw. als stiftförmiger Zylinder ausgeführt werden. Wie im Verfahrensteil beschrieben, greift dieses Mitnehmerelement in das Gewinde eines bei der Montage eingeführten Befestigers 35 ein und wird durch den Einschraubvorgang in Richtung Befestigerkopf bewegt. Das Mitnehmerelement wird also so ausgelegt, dass es geometrisch in das Gewinde eingreifen kann, einrastet oder vom Gewinde so angepasst bzw. eingeformt wird, dass das Gewinde beim Eindrehen des Befestigers eine Kraft ausüben kann, die parallel zur Befestigerlängsachse wirkt.

Erfindungsgemäß weist der Verbindungsbügel 25 am Ubergang zum ersten bzw. zweiten Hülsenelement 21, 22 je eine Sollbruchstelle 31, 32 auf. Der Verbindungsbügel 25 wird dadurch leichter abtrennbar, wie später im Verfahrensteil erläutert.

Wie einleitend erwähnt ist die Hülse gemäss Erfindung ein Bauteil zur einmaligen Verwendung. Das bedingt zum einen eine kostengünstige Herstellung ohne komplexe Herstellschritte und zum anderen die Vermeidung einer dauerhaften Umweltbelastung. Um den ersten Punkt zu adressieren, wird die Hülse gemäss Erfindung bevorzugt als Spritzgiesselement oder Formpresselement ausgeführt. Damit lässt sich das Bauteil mit geringem Aufwand herstellen. Dabei wird als Material bevorzugt ein spritzgiessfähiger Kunststoff, insbesondere ein biologisch abbaubarer Kunststoff verwendet. Dieser kann auf der Montagestelle verbleiben und wird im Boden abgebaut bzw. kann ohne besondere Massnahmen entsorgt werden. Alternativ kann eine Hülse aus gebundenen Papierfasern, Pflanzenfasern, oder andere Verbundwerkstoffe gefertigt werden, z.B. durch Pressung und nachfolgende maschinelle Trocknung.

Das Montageverfahren zur Befestigung eines Fassadenelementes 34 an der Unterkonstruktion einer Gebäudehülle kann mit den folgenden Schritten realisiert werden:
Eine erfindungsgemässe Hülse wie oben beschrieben wird in eine dafür vorgesehene Bohrung eines Fassadenelementes 34 eingeführt, so dass die flanschartige Auskragungen 26, 27 auf der Oberfläche des Fassadenelementes 34 anliegen. Das Einführen kann manuell oder maschinell erfolgen, als Einführhilfe wird der Verbindungsbügel 25 verwendet.

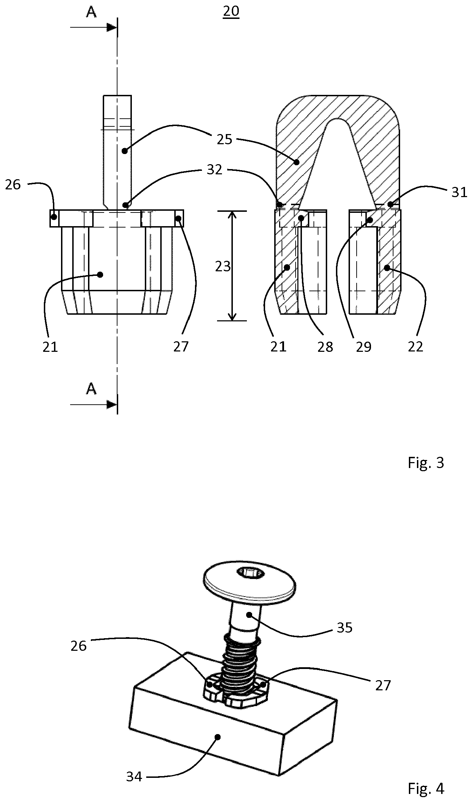

Der Verbindungsbügel kann sehr einfach wie in den Figuren 2 und 3 gezeigt ausgebildet werden, könnte aber auch weitere Elemente aufweisen, die ein maschinelles Setzen erlauben. Der Bügel kann auch als Verbindungsglied zu weiteren Hülsen / Bügeln dienen, in der Art eines Magazinstreifens.

Nach dem Einführen der Hülse erfolgt das Abbrechen des Verbindungsbügels 25 entlang der Sollbruchstellen 31, 32 zu den Hülsenelementen 21, 22, z.B. durch Abknicken oder mehrfaches Hin-und Herbewegen (Abscheren) oder Abdrehen.

Anschliessend steht der Bügel einem Befestiger nicht mehr im Wege. Wie geschildert, kann der Hülsenkörper 23 mit den Hülsenelementen 21, 22 so ausgeführt sein, dass er aus Wandelementen besteht, die nach Abbrechen des Bügels nicht mehr miteinander verbunden sind. Die beiden Hülsenelemente liegen also lose in der Vorbohrung auf. Es hat sich gezeigt, dass in der Praxis dies keine Rolle spielt, die vorhandene Reibung zwischen Hülsenelementen und Vorbohrungs-Innenwand reicht zur vorübergehenden Fixierung der Hülsenelemente.

Alternativ könnten auch die Hülsenelemente 21, 22 auch mit einfachen, dünnen Stegen miteinander verbunden sein, die Sollbruchstellen bilden. Diese Sollbruchstellen werden dann beim Setzen des Befestigers später aufgebrochen.

Im nächsten Schritt wird ein Befestiger, in der Regel eine Schraube oder ein geeignetes, technisches Äquivalent in die Längsöffnung der Hülse eingeführt. Dadurch werden die beiden Hülsenelemente 21, 22 erneut an die Innenwand der Bohrung gedrängt. Die flanschartigen Auskragungen 26, 27 verhindern, dass die Hülsenelemente tiefer in die Vorbohrung eindringen als nötig. Die nach innen kragenden Mitnehmerelemente 28, 29 greifen in das Gewinde des Befestigers ein oder formen sich an.

Im nächsten Verfahrensschritt beginnt das Eintreiben des Befestigers. Dabei kommt es zum Zusammenspiel des Anschlagflansches (Auskragungen 26, 27) mit den Mitnehmerelementen 28, 29. Solange die Schraubenspitze nicht die Unterkonstruktion erreicht hat, wird der Druck, den der Monteur über den Befestiger auf die Hülsenelemente ausübt, die Hülse in der Vorbohrung stabilisieren und die Zentrierwirkung der Hülse entfaltet sich. Sobald die Bohr- oder Zentrierspitze des Befestigers die Unterkonstruktion erreicht, wird die Hülse entlastet, weil die Schraubenspitze sich in die Unterkonstruktion einfurcht und der überwiegende Teil des Drucks auf die Spitze übergeht. Wegen der Mitnehmerelemente 28, 29, die sich mit der Gewindespirale im Eingriff befinden, werden die Hülsenelemente jedoch in Richtung Schraubenkopf, also aus dem Vorbohrloch herausgefördert und fallen zu Boden. Die kurze Zeitspanne, in der der Vortrieb bei laufender Drehung des Befestigers stoppt, bis die Bohr-/Verdränger-/Zentrierspitze in der Unterkonstruktion greift, reicht aus um die Zentrierwirkung zu gewährleisten und das vollständige Auswerfen der Hülsenelemente zu bewerkstelligen und damit die Befestigung zu vervollständigen. Der Befestiger ist optimal gesetzt und hat in der Vorbohrung des Fassadenelementes das vordefinierte Spiel.

Durch die geschilderte Funktionsweise wird die notwendige Dimensionierung der Hülse offenkundig. Der Aussendurchmesser muss so gewählt werden, dass die Hülse sich in die Vorbohrung des Fassadenelementes problemlos einfügen lässt. Der Innendurchmesser der Hülse (im unverbauten Zustand, also mit Verbindungsbügel 25) wird so gewählt werden, dass sie geringfügig grösser ist als der Nenndurchmesser des Befestigers. Das Vorstehmass der nach innen gerichteten Mitnehmerelemente wird so gewählt, dass sie einerseits sicher in das Gewinde eingreifen können, aber auch nicht beim Einstecken des Befestigers abgeschert werden können. Ein Fachmann wird die Dimensionen materialabhängig entsprechend auslegen können.

Die axiale Länge des Hülsenkörpers 23 wird maximal der Tiefe der Vorbohrung entsprechen bzw. der Dicke des zu befestigenden Fassadenelementes. Er kann aber auch kürzer ausgelegt werden und damit für verschieden dimensionierte Fassadenelemente angewendet werden. Die vorgängig beschriebene Wechselwirkung beim Setzen des Befestigers in der Unterkonstruktion erlaubt diese Auslegung. Ein weiteres Kriterium für die Länge des Hülsenkörpers 23 ist natürlich der verbleibende Abstand zwischen der Unterseite des Befestigerkopfes und der Oberfläche des Fassadenelementes, betrachtet in dem Moment, sobald die Spitze des Befestigers auf die Unterkonstruktion trifft. Der Logik des Setzvorgangs folgend, wird die Hülse aus dem Bohrloch gefördert, während gleichzeitig der der Kopf des Befestigers sich in Richtung Fassadenplattenelement absenkt. Die Hülsenlänge, bzw. die Länge des Hülsenkörpers 23 muss so gewählt werden, dass es zu keinem Einklemmen der Hülsenelemente 21, 22 zwischen Fassadenelement und der Unterseite des Befestigerkopfes kommt. Bei der Auslegung spielen das Gewinde des Befestigers, die Materialpaarung aus Hülse und Fassadenelement sowie verschiedene andere Faktoren eine Rolle. Durch einfache Versuche lassen sich jedoch geeignete Dimensionen innerhalb der hier geschildeten Grenzen finden.

In einer als gut funktionierend befundenen Kombination beträgt der Aussendurchmesser der Hülse (ohne Flansch) ca. 10mm, der Flansch ragt ca. 0.5mm vor. Die Länge des Hülsenkörpers 23 beträgt ca. 7.5mm.

### BESCHREIBUNG DER FIGUREN

Figur 1 bezieht sich auf eine Zentrierhülse nach dem Stand der Technik. Im Querschnitt, nicht massstäblich, ist eine Hülse 10 gezeigt mit einem Kragen bzw. Flansch 12 und einem Boden 16. Der im Wesentlichen rohrförmigen Körper 14 ist üblicherweise aus einem elastischem Material. Das gezeigte Mittenloch 18 ist optional und dient der Führung eines Befestigers bei der Montage.
Figur 2 zeigt die Schrägansicht einer Zentrierhülse gemäss Erfindung in bevorzugter Ausführung. Die Hülse 20 ist unterteilt in zwei Grundelemente, der Hülsenkörper 23 und der Verbindungsbügel 25. Der Hülsenkörper 23 besteht hier aus zwei Hülsenelementen 21, 22, die über Sollbruchstellen 31, 32 mit dem Verbindungsbügel 25 verbunden sind. Ebenso erkennbar sind die beim Einsetzen in die Vorbohrung als Anschlag wirkenden Auskragungen 26, 27. Diese sind hier nicht nur als ringförmige Abschnitte ausgeführt, angedeutet durch 26 und 26'.
Die Figur 3 zeigt eine erfindungsgemässe Zentrierhülse 20 in zwei um 90° verdrehten Seitenansichten. Der in den Figuren untere Teil, der mit 23 bezeichnet ist markiert wiederum den Hülsenkörper; der Verbindungsbügel 25 ist an den Hülsenelementen 21, 22 via Sollbruchstellen 31, 32 verbunden. In der Seitenansicht links sind Auskragungen 26, 27 erkennbar, während der Schnitt rechts die an der Innenseite angebrachten Mitnehmerelemente 28, 29 zeigt. Diese sind hier einfach als horizontale Bügel in der Form einer Sekante ausgeführt und haben dadurch auch noch eine versteifende Wirkung auf das Hülsenelement.
In Figur 4 ist eine Montagesituation gezeigt. Das Fassadenelement 34 weist eine Vorbohrung auf, in der eine Zentrierhülse eingeführt wurde, so dass die flanschartigen Auskragungen 26, 27 auf der Oberfläche des Fassadenelementes aufliegen. Der Verbindungsbügel 25 fehlt, er wurde abgebrochen und macht so dem Befestiger 35 Platz. Die Momentaufnahme zeigt die Hülse noch im versenkten Zustand, bevor durch das Antreiben des Befestigers das Ausfördern der versenkten Hülsenelemente beginnt.

## Patentansprüche

1. Hülse (20) zur Zentrierung von Befestigern bei der Montage von Bauteilen wie Fassadenelementen an der Unterkonstruktion einer Gebäudehülle; mit einem Hülsenkörper (23) aus mehreren Hülsenelementen (21, 22) die um eine zentrale Mittenachse A gruppiert sind und durch in Hülsenlängsrichtung verlaufende Lücken voneinander beabstandet sind, wobei mindestens ein erstes (21) und ein zweites (22) Hülsenelement je über eine flanschartige Auskragung (26, 27) radial nach außen verfügen, **dadurch gekennzeichnet, dass** das erste (21) und das zweite (22) Hülsenselement an einem axialen Längsende des Hülsenkörpers (23) durch einen abtrennbaren Verbindungsbügel (25) miteinander verbunden sind, der am Übergang zum ersten bzw. zweiten Hülsenelement (21, 22) je eine Sollbruchstelle (31, 32) aufweist; und das erste (21) und das zweite (22) Hülsenelement über je mindestens ein Mitnehmerelement (28, 29) verfügen, das als nach radial innen gerichteter Vorsprung realisiert ist.

2. Hülse (20) nach Anspruch 1, **dadurch gekennzeichnet, dass** die mechanische Verbindung zwischen dem ersten (21) und zweiten (22) Hülsenelement vor dem Einsatz der Hülse ausschliesslich durch den Verbindungsbügel (25) erfolgt.

3. Hülse (20) nach Anspruch 1-2, **dadurch gekennzeichnet, dass** die flanschartigen Auskragungen (26, 27) an einem axialen Ende des Hülsenkörpers (23) angeordnet sind.

4. Hülse (20) nach Anspruch 1-3, **dadurch gekennzeichnet, dass** das Mitnehmerelement (28, 29) als Nocke, Steg, als flanschartiger Ringabschnitt bzw. als stiftförmiger Zylinder ausgeführt ist.

5. Hülse (20) nach Anspruch 1-4, **dadurch gekennzeichnet, dass** die Hülse (20) ein Spritzgiesselement oder Formpresselement ist.

6. Hülse (20) nach Anspruch 1-5, **dadurch gekennzeichnet, dass** das Material der Hülse (20) ein Kunststoff ist, ein biologisch abbaubarer Kunststoff bzw. gebundene Papierfasern, Pflanzenfasern, oder andere Verbundwerkstoffe umfasst.

7. Verfahren zur Befestigung eines Fassadenelementes an der Unterkonstruktion einer Gebäudehülle, mit den folgenden Schritten:
a) Einsetzen einer Hülse (20) gemäss Anspruch 1-6 in eine dafür vorgesehene Bohrung des besagten Fassadenelementes, so dass die flanschartigen Auskragungen (26, 27) auf der Oberfläche des Fassadenelementes anliegen
b) Abbrechen des Verbindungsbügels (45) entlang der Sollbruchstellen (31, 32) zu den Hülsenelementen (21, 22)
c) Einführen eines Befestigers in die Längsöffnung der Hülse
d) Antreiben der Befestigers
e) Einsenken des Befestigers in die Unterkonstruktion, wobei durch die Hülse (20) eine Zentrierung in der Bohrung des Fassadenelementes erzielt wird und die Mitnehmerelemente (28, 29) in die Gewindefurchen des Befestigers einrasten
f) Auswerfen der Hülsenelemente (21, 22) aus der Bohrung des Fassadenelementes durch das Antreiben des Befestigers
g) Fertigstellung der Befestigung wobei kein Rest der Hülse (20) im Verbund Schraube - Fassadenelement - Unterkonstruktion verbleibt.

## Claims

1. A sleeve (20) for centering fasteners during the assembly of components such as facade elements on the substructure of a building envelope; comprising a sleeve body (23) formed from a plurality of sleeve elements (21, 22) which are grouped around a central center axis A and spaced apart from each other by gaps running in a sleeve longitudinal direction, wherein each of at least a first (21) and a second (22) sleeve element has a radially outward flange-shaped overhang (26, 27), **characterized in that** the first (21) and the second (22) sleeve element are connected to each other at an axial longitudinal end of the sleeve body (23) by a separable connection bracket (25) which has in each case one predetermined breaking point (31, 32) at the transition to the first and second sleeve elements (21, 22); and the first (21) and the second (22) sleeve element each has one driver element (28, 29) that is implemented as a radially inwardly directed projection.

2. The sleeve (20) according to claim 1, **characterized in that** the mechanical connection between the first (21) and the second (22) sleeve elements is exclusively made by the connection bracket (25) before use of the sleeve.

3. The sleeve (20) according to claims 1 - 2, **characterized in that** the flange-like overhangs (26, 27) are arranged at an axial longitudinal end of the sleeve body (23).

4. The sleeve (20) according to claims 1 - 3, **characterized in that** the driver element (28, 29) is designed as a cam, a web, a flange-like ring section or a pin-shaped cylinder.

5. The sleeve (20) according to claims 1 - 4, **characterized in that** the sleeve (20) is an injection molded element or compression molded element.

6. The sleeve (20) according to claims 1 - 5, **characterized in that** the material of the sleeve (20) is a plastic, a biodegradable plastic or bonded paper fibers, plant fibers, or other composite materials.

7. A method for fastening a facade element to the substructure of a building envelope, comprising the following steps:
a) inserting a sleeve (20) according to claims 1 - 6 in a hole of said facade element provided for this purpose so that the flange-like overhangs (26, 27) rest against a surface of the facade element,
b) breaking off the connection bracket (45) along the predetermined breaking points (31, 32) to the sleeve elements (21, 22),
c) inserting a fastener into the longitudinal opening of the sleeve,
d) driving the fastener,
e) countersinking the fastener into the substructure, wherein a centering in the hole of the facade element is achieved by means of the sleeve (20) and the driver elements (28, 29) lock in the thread grooves of the fastener,
f) ejecting the sleeve elements (21, 22) from the hole of the facade element by driving the fastener, and
g) completing the fastening, wherein no remainder of the sleeve (20) remains in the combination screw-facade element-substructure.

## Revendications

1. Manchon (20) de centrage d'éléments de fixation lors du montage de composants, comme des éléments de façade sur la substructure d'une enveloppe de bâtiment, avec un corps de manchon (23) en plusieurs éléments de manchon (21, 22), qui sont groupés autour d'un axe médian central A et sont à distance l'un de l'autre par des vides passant dans la direction longitudinale de manchon, sachant qu'au moins un premier (21) et un deuxième (22) élément de manchon disposent respectivement radialement vers l'extérieur d'une saillie de type bride (26, 27), **caractérisé en ce que** le premier (21) et le deuxième (22) élément de manchon sont reliés l'un à l'autre à une extrémité longitudinale axiale du corps de manchon (23) par un étrier de jonction (25) séparable, qui comporte pour chacun un point de rupture théorique (31, 32) au point de transition du premier ou deuxième élément de manchon (21, 22) et le premier (21) et le deuxième (22) élément de manchon disposent respectivement d'au moins un élément d'entraînement (28, 29), qui est réalisé sous la forme d'une saillie dirigée radialement vers l'intérieur.

2. Manchon (20) selon la revendication 1, **caractérisé en ce que** la liaison mécanique entre le premier (21) et le deuxième (22) élément de manchon a lieu avant l'insertion du manchon exclusivement par l'étrier de jonction (25).

3. Manchon (20) selon les revendications 1 - 2, **caractérisé en ce que** les saillies (26, 27) de type bride sont disposées sur une extrémité axiale du corps de manchon (23).

4. Manchon (20) selon les revendications 1 - 3, **caractérisé en ce que** l'élément d'entraînement (28, 29) est exécuté sous la forme de came, de nervure, sous la forme de section annulaire de type bride ou sous la forme de cylindre en forme de tige.

5. Manchon (20) selon les revendications 1 - 4, **caractérisé en ce que** le manchon (20) est un élément moulé par injection ou un élément moulé par compression.

6. Manchon (20) selon les revendications 1-5, **caractérisé en ce que** le matériau du manchon (20) est une matière plastique, une matière plastique biodégradable ou des fibres de papier liées, des fibres végétales ou d'autres matériaux composites.

7. Procédé de fixation d'un élément de façade sur la substructure d'une enveloppe de bâtiment avec les étapes suivantes :
a) insertion d'un manchon (20) selon les revendications 1 - 6 dans un trou prévu à cet effet dudit élément de façade de telle sorte que les saillies de type bride (26, 27) s'appliquent à la surface de l'élément de façade,
b) rupture de l'étrier de jonction (45) le long des points de rupture théoriques (31, 32) aux éléments de manchon (21, 22),
c) introduction d'un élément de fixation dans l'ouverture oblongue du manchon,
d) propulsion de l'élément de fixation,
e) chambrage de l'élément de fixation dans la substructure, sachant qu'un centrage est obtenu dans le trou de l'élément de façade par le manchon (20) et les éléments d'entraînement (28, 29) s'enclenchent dans les rainures de filet de l'élément de fixation,
f) éjection des éléments de manchon (21, 22) du trou de l'élément de façade par l'entraînement de l'élément de fixation,
g) mise en place définitive de la fixation, sachant qu'aucun reste du manchon (20) ne reste dans l'ensemble composite vis-élément de façade-substructure.
